# EUROPEAN PATENT APPLICATION

(11) **EP 1 521 494 A2**
(43) Date of publication of application: **06.04.2005**
(21) Application number: 04104725.9
(22) Date of filing: 28.09.2004
(51) Int. Cl.: H04Q 7/38

(54) **Method and Radio Network for distributing the processing related to macro diversity combining for soft handover**

(30) Priority: 30.09.2003 FI 20031409
(71) Applicant: Nokia Corporation, 02150 Espoo (FI)
(72) Inventor: Vestama, Mikael, 00550, Helsinki (FI); Tang, Haitao, 00300, Helsinki (FI); Hiironniemi, Outi, 00180, Helsinki (FI)
(74) Representative: Niemi, Hakan

(57) **Abstract**

A radio network, comprising base stations (102-112) for providing a radio interface of the network, a terminal (120) having a radio connection with at least two base stations (102-112) of the network forming an active set. The network comprises a serving base station (102-112) outside the active set for performing a serving functionality relating to the radio connections between the terminal (120) and the base stations (102-112) in the active set.

## Description

### Field

The invention relates to distribution of processing in a radio network.

### Background

During soft handover, a terminal such as a mobile phone, is in the coverage area of two partly overlapping cells that belong to different base stations (BTS). Communications between the mobile station and base stations take place simultaneously via two air interfaces from each base station separately. The base stations that are in connection with the mobile station form an active set of the connection. The signals from different base stations in the active set are combined in a macro diversity combining (MDC) point, that is, a serving base station (S-BTS), which is selected from the base stations in the active set.

The current solutions have significant drawbacks. When the MDC point is selected from the base stations in the active set, practically each BTS must always be able to serve all the traffic that arises from the area of the BTS site. That is, each BTS must be dimensioned in such a way that it can always provide the hardware and processing power, such as the number of DSP (Digital Signal Processing) channels, MUP (Multiradio User Processing) unit MCU (Main Controller Unit) processing power and MUP unit combining capacity, required by the traffic.

### Brief description of the invention

An object of the invention is to provide an improved method and apparatus for rearranging processing in a radio network. According to the invention, there is provided a processing method in a radio network, wherein a terminal has a radio connection with at least two base stations of the network forming an active set. The method comprises the step of performing a serving functionality relating to the radio connections between the terminal and the at least two base stations in a serving base station outside the base stations in the active set.

The invention also relates to a radio network comprising base stations for providing a radio interface of the network, a terminal having a radio connection with at least two base stations of the network forming an active set. The network comprises a serving base station outside the active set for performing a serving functionality relating to the radio connections between the terminal and the base stations in the active set.

Preferred embodiments of the invention are described in the dependent claims.

The invention thus relates to a method and arrangement for distributing processing in a radio network. In the invention, the serving base station functionality is performed by a base station selected from the group of base stations containing the base stations in the active set, and also from other base stations neighbouring the serving BTS. Thus, according to the invention, the selection of the base station is not limited to the base stations in the active set. The S-BTS selection method according to invention provides the significant advantage that it becomes possible to distribute the processing load and data combination load of soft handover calls to topologically proper locations in a radio network. In the invention, some of the base stations may be over/under dimensioned in view of hardware and/or processing capacity. Then, the serving base station functionality of each connection may be relocated to a BTS most capable of handling the MDC processing. Then, processing from under-dimensioned base stations may be relocated to over-dimensioned base stations as necessary.

By gathering the MDC-points from a large enough cluster of BTSs to the so-called star-BTSs having a high processing capacity it is also likely to reduce the number of S-BTS relocations experienced by the calls and especially to reduce the possible transporting delays due to data transport between the serving-BTS and the leaf-BTSs. Also, in concentrating the S-BTSs to star-BTSs, it may be possible to build cheaper leaf-BTSs with less processing capacity than it otherwise would be. This is due to the fact that most of the processing of the calls in the leaf-BTSes can be carried out in the star-BTS.

### List of drawings

In the following, the invention will be described in greater detail with reference to the preferred embodiments and the accompanying drawings, in which
Figure 1 illustrates an example of a network topology,
Figure 2 shows one embodiment of a method according to the invention,
Figure 3 shows another embodiment of the method according to the invention,
Figure 4 shows still another embodiment of the method according to the invention, and
Figure 5 illustrates an example of an apparatus according to the invention.

### Description of embodiments

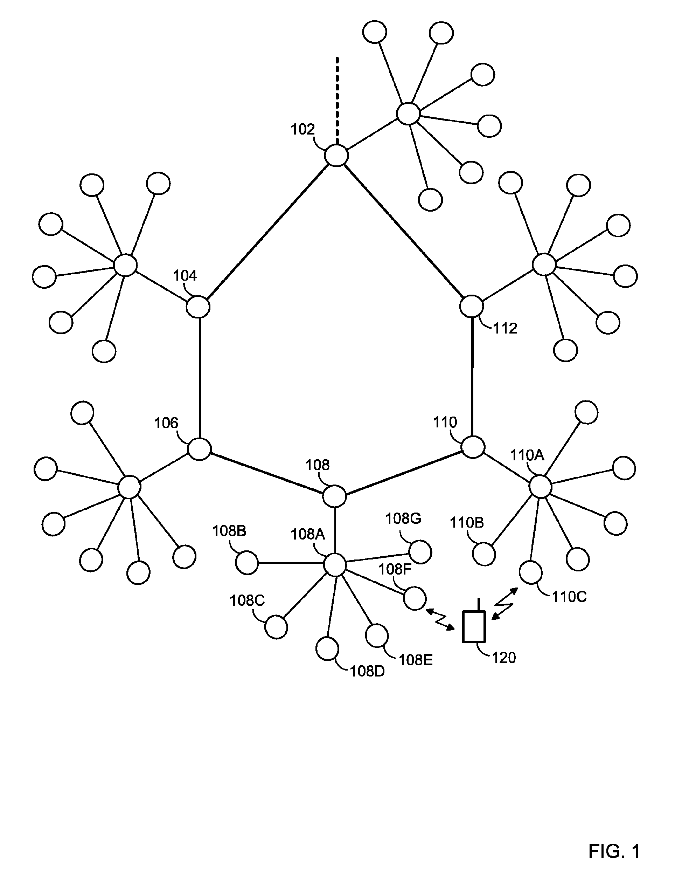

Figure 1 shows an example of a network topology. The network 100 is a ring-like network, where the ring is formed by network elements 102 to 112. The network may also have a topology other than a ring, such as a tree, for instance. In one embodiment, the network elements are base stations of a radio network implementing the radio interface towards a mobile terminal 120 that is using the network 100. The base stations are connected with each other by fixed cable connections according to a predetermined topology. For instance, the line between base stations 102 and 112 illustrates this fixed connection.

In Figure 1, the mobile terminal 120 has a radio connection with two base stations 108F and 110C. The mobile terminal is thus in a soft handover situation, wherein an active set contains base stations 108F and 110C. The network of Figure 1 may illustrate a third generation UMTS (Universal Mobile Telecommunication System) network, for example. A network according to the invention may also be a fourth generation (4G) telecommunication system, for instance, providing handover functionality for a mobile terminal.

Considering that Figure 1 discloses a standard-based UMTS system, the radio connection between the terminal 120 and each of the base stations 108F, 110B is a bidirectional connection called a Uu-connection. One of these base stations 108F, 110C then acts as a macro-diversity combining/splitting point combining/splitting the signals received/transmitted by the other base stations in the active set. Considering that 108F is the S-BTS, the signal from the base station 110C has to be forwarded from the base station 110C to the base station 108F via the route 110C-110A-110-108-108A-108F. The route contains five legs, and if each of the legs has a transportation delay of T, to implement the whole combining/splitting functionality the signal has to be transported via the route to both directions, resulting in a total delay of 10T. However, when the inventive idea is applied, the S-BTS functionality could be relocated to the node 108. The total transportation delay from base station 108F would then be 4T and from the base station 110C the transportation delay would be 6T. Clearly, selecting either the node 108 or the node 110 as the S-BTS would be a more optimal solution than selecting one of the base stations in the active set when transportation delay is used as a criterion.

The network topology of Figure 1 may be defined by the following definitions. A base station that only has one connection to another base station is a leaf base station. A base station having two or more connections to leaf base stations is a star base station for the leaf base stations. The base station 108A is thus a star base station for leaf base stations 108B to 108G. Preferably, the definition of a star base station also includes that the star is located on the shortest path from a leaf base station towards an RNGW (Radio Access Network Gateway) point 102.

Base stations that are two or more legs higher than a leaf base station in the network topology are called high star base stations for a certain base station. For instance, in Figure 1, base stations 110, 108 and 106 are high-star base stations for a leaf base station 108D, because these base stations are on the shortest path to the highest point in the network topology, which is the RNGW point 102. Alternatively, also the base stations on the second shortest path to an RNGW might be used as high star base stations. Then, the base station 108 could in some configurations be used as a high star base station for the base station 110C.

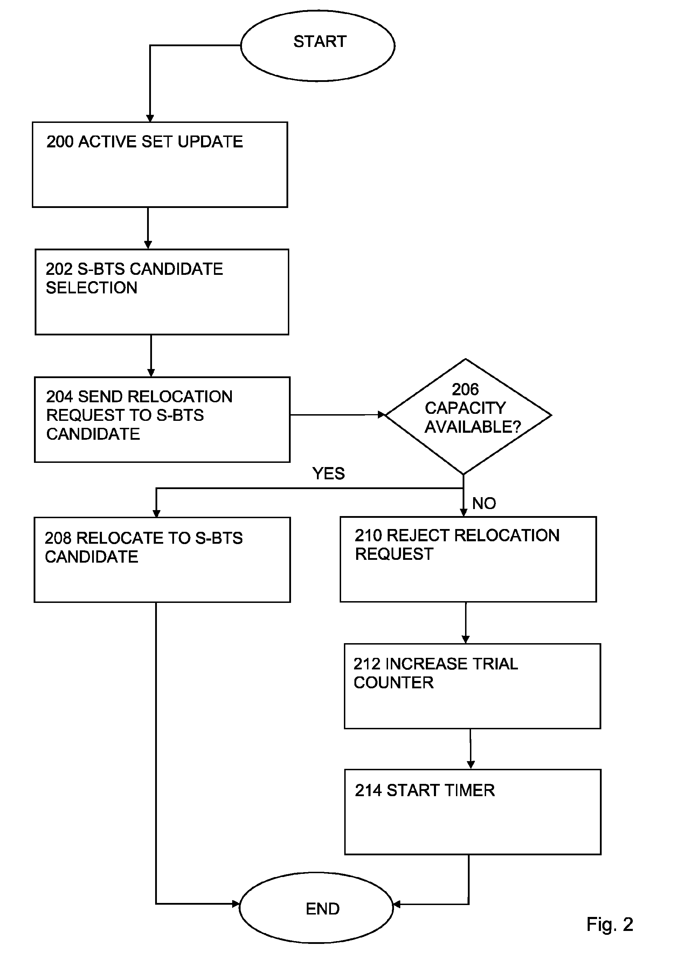

An area in the network where there is only one link connecting the area to another part of the network is called a branch. In Figure 2, the network area connecting base stations 108A to 108G to the rest of the network is a branch.

Figure 2 shows one example of a method according to the invention. At the start of the method, a base station is expected to be responsible for the S-BTS functionality for one or more connections. In step 200, one of these connections experiences an active set update triggering the method in Figure 2 for all connections. In step 202, an S-BTS candidate selection is performed for each connection. If a candidate is found, a relocation request is transmitted in step 204 to the candidate BTS found. In method phase 206, it is checked whether there is enough capacity in the candidate BTS for it to take over the S-BTS functionality. The capacity is estimated by assessing the MCU (Main Controller Unit) load of the candidate BTS, for instance. In the estimation, it can be checked that a predefined threshold value, for example 95% of available MUPs (Multiradio Userplane Processor), is not exceeded. If there is capacity available in the candidate BTS, the S-BTS functionality is, as shown by method step 208, transferred from the original S-BTS to the candidate BTS found. If the candidate BTS does not have the capacity to receive more S-BTS functionality, the relocation request is rejected 210 by the candidate BTS. Upon reception of the rejection, the S-BTS adds 212 a trial counter, which keeps track of rejected relocation requests for a connection. In step 214, a timer is started in the S-BTS. The S-BTS can actually have two timers, one for a star BTS and one for a high star BTS.

The advantage obtained with timers is that the load situation of possible candidates can be obtained indirectly without any specific interface for delivering load situations of BTSs to each other. The basic concept with a timer is thus to indirectly indicate the load level of the BTS represented by it. If the timer of a BTS is on, the BTS is not selected as the target BTS, that is, as a star or a high star of the current serving BTS. The timers are started/restarted whenever a candidate BTS rejects an S-BTS relocation request. The rejection can always be assumed to indirectly indicate the lack of capacity in the target BTS and, by using timers, it is possible to indicate to the S-BTS whether a candidate BTS has capacity or not. The use of timers prevents abortive relocation requests from being made and they also work as an efficient way to prevent possible overload situations in the target BTS.

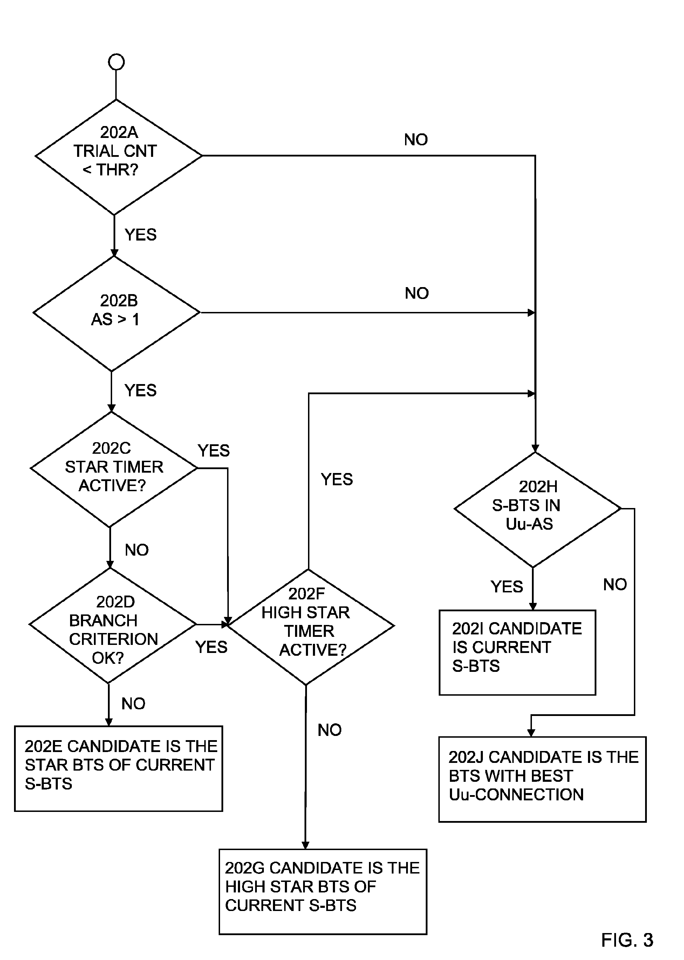

Figure 3 specifies an embodiment of the candidate selection step 202 of Figure 2. First, it is checked whether the trial counter relating to the connection, which experienced the ASU exceeds a predetermined threshold value. The threshold value may, for instance, be set to one, so that if a relocation request for a connection is rejected twice by a star or by a high star, the connection will no longer try to perform a relocating.

In step 202B it is checked whether the connection is in a soft handover. This is carried out by checking, whether the size of the active set is greater than one excluding softer handovers. The base station may continuously keep a counter to indicate how many base stations are currently in the active set. Unless both conditions 202A and 202B are true, the prior art selection rule disclosed by steps 202H to 2021 is applied in finding out the S-BTS candidate in soft handover. In check 202H, it is checked whether the current serving base station belongs to the active set. If not, according to method step 202I, the current serving BTS remains as the serving BTS, otherwise according to the step the candidate with the best Uu-connection is selected as the new serving base station.

If, originally, the trial counter has not been exceeded and the number of base stations in the active set exceeds one, the method proceeds to check 202C. Check 202C indicates whether a star timer is active or running. The star timer may have been started or restarted in conjunction with the latest relocation rejection by the star BTS. If the timer is running, the method proceeds to step 202F, where it is checked whether a high-star timer is running.

If the star timer check 202C indicates that a star timer is not running, the method proceeds to check 202D the branch criterion. The branch criterion here means checking that a predetermined part of the base stations in the active set belong to the same branch as the star-BTS of the current BTS. The criterion can be, for instance, checking whether more than 50% of the BTSs in the active set belong to the same branch as the star-BTS of the current S-BTS. The branch criterion can alternatively be formulated as follows: "more than half of the BTSs of the Uu-AS belong to the same branch". If the condition "more than half of the BTSs of the Uu-AS belong to the same branch" is not true, it means that the BTSs of the Uu-AS belong to two or more branches. If this is the case, the selection method tries to locate the MDC-point to a high star. Another way to formulate the branch criterion is: "if all of the BTSes of the Uu-AS belong to the same branch". This criterion clearly over-weights the high start BTSs over the star BTSs.

If the branch criterion checked in step 202E is fulfilled, the star-BTS of the current S-BTS is selected as the new S-BTS. If the star timer was running according to check 202C or if the branch criterion is not fulfilled according to check 202D, the method proceeds to check the high star timer in check 202F. If the high star timer is not running, the high star BTS is selected according to step 202G as the new S-BTS candidate. Otherwise the candidate is selected according to the default selection rule shown by steps 202H to 202J.

In the method according to Figure 3, the branch condition to select between the star and high-star can easily be altered. If a higher part of BTSs is required to be in the active set in order to select the star BTS as the candidate BTS, it becomes more likely to relocate more calls into high-star than otherwise. The high-star is topologically the most optimal place to serve as an S-BTS for such a call that has at least one BTS in its Uu-AS from another network branch. However, a high-star may easily get congested by traffic, since a high-star is often in the hierarchy above a much larger number of BTSs than a star is. Consequently, in some network configurations, a star may be prioritised over a high-star in the selection.

The disclosed embodiments in Figures 2 and 3 show an algorithm comprising the steps for determining whether the MDC functionality could be relocated to a star or a high star, or if the standard functionality should be used. Alternatively to the disclosed algorithm, the candidate base stations can be predefined to a lookup table. The lookup table may contain all possible active set combinations and suggest a candidate base station for each combination. Returning to Figure 1, in an exemplary situation, after an active set update, the active set contains base stations 108F, 110B, 110C and the base station 110B is the S-BTS. The lookup table would suggest for this mentioned active set that the star BTS 110A of the current serving BTS 110B should be the new serving BTS. The lookup table may also contain a high star candidate in case the relocation request is rejected.

In the usage of the selection rule, the most important input information is the topological information on the network. Each BTS that is assumed to use the selection method must have knowledge of the topology of the network. Thus, each BTS has to know which network branch it and its neighbours belong to. Additionally the BTS must know which BTS is its star BTS and which BTS is its high star BTS.

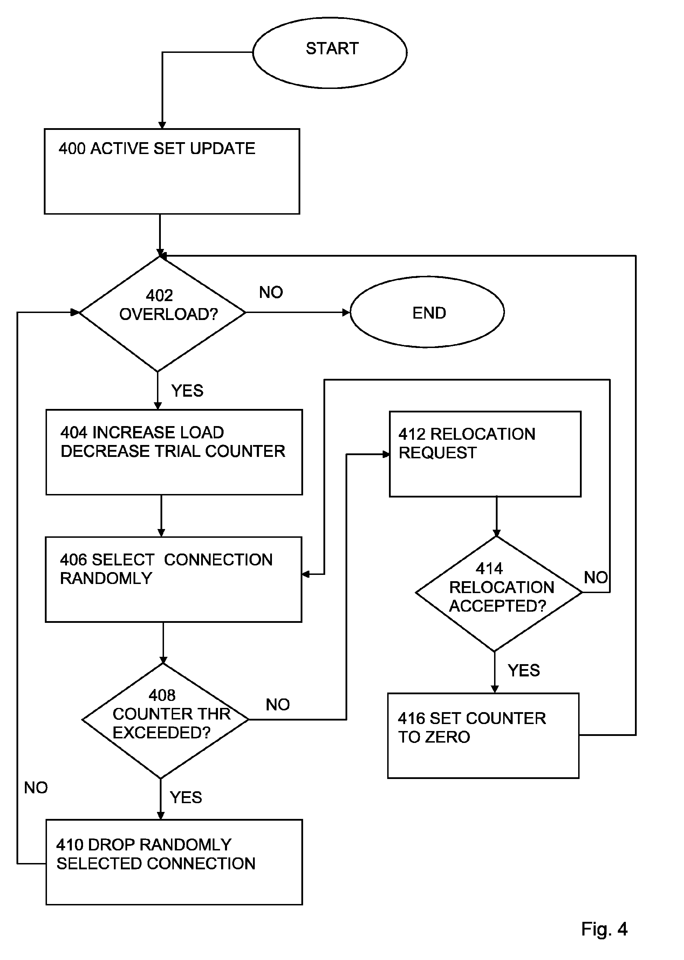

Although the capacity of the star and high-star BTSs is always checked when they receive a relocation request, it may still sometimes happen that the BTSs are in danger of experiencing an MUP unit overload. This can happen if, in a short enough time period, many new calls either establish a Uu-connection to either the star or high-star or choose the S-BTS to be either of these BTSs. Figure 4 illustrates the overload control method.

A trigger to execute the overload control routine is an ASU 400 that takes place for any connection for which a BTS works as an S-BTS. When an ASU takes place, the BTS checks 402 whether or not it is in danger of experiencing an overload. The danger of overload is evident if the combining data processed by the base station exceeds the maximum combining capacity from which a combining threshold value is subtracted. The combining threshold value defines the loading level at which the connections with the S-BTS should be relocated away. The danger over overloading can also be assessed if the current loading of the BTS exceeds the maximum loading level allowed for a BTS. The overload threshold value in the overload control procedure can be a greater value than the threshold used in the selection procedure. There can thus be a gap in the load value where the BTS is no more selected to be an S-BTS but no overload control is used either. If there is no danger of overload the program returns to idle state.

Otherwise, the value of load decrease trials counter is increased 404 by one and a default S-BTS candidate selection is performed 406 onto a randomly selected call served by this BTS. The default S-BTS candidate selection 406 is performed onto as many randomly selected calls as necessary to find a call whose S-BTS candidate is a BTS other than the current BTS. Should the S-BTS candidate be a BTS other than the current S-BTS performing the method, a relocation request is performed 412. However, due to a danger of overload, it is necessary to wait for a reply to the request. Should the request be rejected, the default S-BTS candidate selection 406 is performed on a randomly selected call until an acceptance of a relocation request is received. When the acceptance has been received, the load decrementing counter is set to zero 416, after which it is necessary to perform the overload check 402 once again. If a danger of overload still exists, the process is repeated. If no danger of overload exists anymore, the program returns to idle state. If the maximum number of load decrease trials be reached the routine stops trying to find the calls to be relocated and drops 410 a randomly selected call, after which the overload check 402 is performed once again.

When selecting the call to be relocated or dropped, one way to do this is to choose the call randomly. Naturally, the most effective way would be to relocate the S-BTSs of foreign calls, which are calls that do not have a Uu-connection to the S-BTS, away from this BTS, but to do so requires an upkeep of constantly updating table which includes all the information of all the foreign calls served by this BTS.

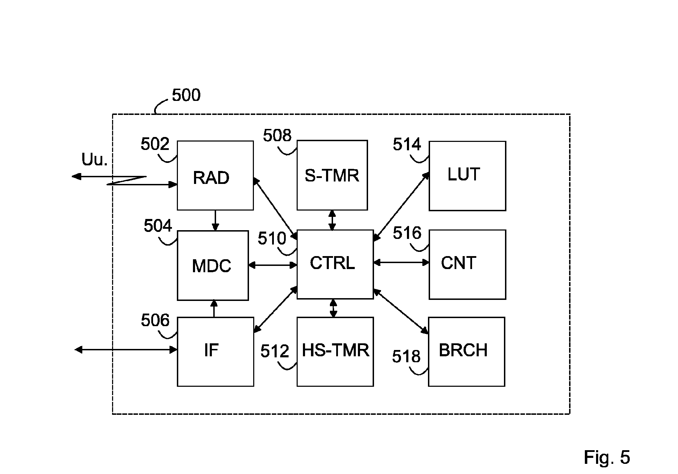

Figure 5 shows one embodiment of an arrangement 500 according to the invention. The arrangement 500 is a base station, for instance. The base station 500 contains a radio transceiver 502 for implementing a radio connection to a mobile phone. Implementing a radio connection is well known to one skilled in the art and needs not be thoroughly discussed here. In a CDMA (Code Division Multiple Access) transceiver the broad concept "implementing a radio connection" includes functions such as (de)spreading, (de)modulating, channel (de)coding, A/D or D/A conversion, conversions between radio frequency and base band frequency.

The base station 500 also includes an interface unit 506. The task of the interface unit 506 is to realize the fixed interfaces to other base stations. Then, if the base station 500 of Figure 5 is the S-BTS in soft handover, the base station 500 receives via the interface unit 506 signals that are received by the other base stations participating in the soft handover. The connections to other base stations may be cable connections, for instance. The interface unit is connected to a combining/splitting unit 504 and the signals from other base stations are forwarded to the combining/splitting unit 504 for performing the MDC functionality.

The central processing unit 510 of the base station 500 is responsible for overall controlling of the functions of the base station. Relating to the inventive concept, the controlling unit has a connection to a star timer unit 508 and to a high star timer unit 512. The central processing unit 510 also has a connection to a look-up table 514, which contains the star and high star base stations corresponding to any combinations of base stations in the active set. The base station also contains a trial counter unit 516 for counting trials to star/high star base stations. A candidate selection unit 518 is responsible for implementing the algorithm for selection of the candidate base station. The control unit 510 contains the load control functionality of the base station and also functionality necessary to coordinate other functions in the base station. That is, the control unit 510 controls transmitting the relocation request when the candidate has been selected and counters, timers and possible triggering conditions have been checked. In practise, the control unit, timers and trial counter can be implemented as software. Also logic circuits or ASIC (Application Specific Integrated Circuit) technology can be used instead of software.

Even though the invention has been described above with reference to an example according to the accompanying drawings, it is clear that the invention is not restricted thereto but can be modified in several ways within the scope of the appended claims.

## Claims

1. A processing method in a radio network, wherein a terminal (120) has a radio connection with at least two base stations (102-112) of the network forming an active set, **characterized by**
performing a serving functionality relating to the radio connections between the terminal (120) and the at least two base stations (102-112) in a serving base station (102-112) outside the base stations in the active set.

2. The method of claim 1, **characterized in that** the serving functionality is macro diversity combining (MDC) in a handover situation.

3. The method of claim 1, **characterized by**:
relocating the serving base station functionality to a base station outside the active set only upon fulfilment of a predetermined triggering condition, and otherwise relocating the serving functionality to a base station belonging to the active set.

4. The method of claim 3, **characterized in that**:
the relocation of the serving functionality is triggered in a base station by an active set update in any of the connections for which the base station is responsible for the serving functionality.

5. The method of claim 3, **characterized by**:
keeping a trial counter indicating the number of relocation trials;
checking that the trial counter does not exceed a predetermined threshold value set for the trial counter.

6. The method of claim 3, **characterized in that** the checking of the triggering condition comprises:
selecting a candidate base station among the base stations in the active set and other neighbouring base stations of the serving base station;
relocating the serving base station functionality to the candidate base station if the load situation of the candidate base station permits taking over the serving base station functionality.

7. The method of claim 6, **characterized by**:
checking that the number of base stations in the active set is greater than one before selecting the candidate base station.

8. The method of claim 6, **characterized by**:
starting a timer if a relocation request is rejected by the candidate base station;
barring the candidate base station from new relocation requests while the timer is active.

9. The method of claim 6, **characterized** that:
the candidate base station is searched for from a predetermined priority list, the priority list providing a candidate base station corresponding to each combination of base stations in the active set.

10. The method of claim 1, **characterized in that**:
the base stations in the network are configured into an arbitrary network topology having a leaf level containing leaf base stations and a star level containing star base stations, wherein a star base station provides a connection to at least two leaf base stations in the leaf level, and wherein the network section of a star and the leafs under the star is a branch.

11. The method of claim 10, **characterized in that** when selecting the serving base station:
determining whether a predetermined part of the base stations in the active set belongs to the same branch;
selecting, if the predetermined part of the base stations in the active set belongs to the same branch, the star base station of the current serving base station as a new serving base station.

12. The method of claim 11, **characterized in that** the predetermined part is required to be such that more half of the base stations in the active set belongs to the same branch.

13. The method of claim 1, **characterized** that:
the serving base station is selected by using transportation delay of performing the serving functionality as a selection criterion.

14. The method of claim 1, **characterized** that:
the serving base station is selected by using the load of base stations as a selection criterion.

15. The method of claim 1, **characterized** that:
monitoring continuously the load level of a base station;
relocating at least one connection for which the base station acts as a serving base station, if a predetermined load condition is fulfilled;
dropping otherwise at least connection served by the base station.

16. A radio network, comprising:
base stations (102-112) for providing a radio interface of the network;
a terminal (120) having a radio connection with at least two base stations (102-112) of the network forming an active set, **characterized in that** the network comprises:
a serving base station (102-112) outside the active set for performing a serving functionality relating to the radio connections between the terminal (120) and the base stations (102-112) in the active set.

17. The radio network of claim 16, **characterized in that** the serving functionality is macro diversity combining (MDC) in a handover situation.

18. The radio network of claim 16, **characterized in that** the network comprises means for selecting the serving base station, the selecting means being configured to check a predetermined triggering condition for determining whether the serving functionality is to be performed in a base station outside the active set or whether the serving functionality is to be performed in a base station belonging to the active set.

19. The radio network of claim 18, **characterized in that** the selecting means are configured to:
select a candidate base station among the base stations in the active set and other neighbouring base stations of the serving base station;
relocate the serving base station functionality to the candidate base station if the load situation of the candidate base station permits taking over the serving base station functionality.

20. The radio network of claim 18, **characterized in that**:
the base stations in the network are configured into an arbitrary network topology having a leaf level containing leaf base stations and a star level containing star base stations, wherein a star base station provides a connection to at least two leaf base stations in the leaf level, and wherein the network section of a star and the leafs under the star is a branch.

21. The radio network of claim 20, **characterized in that** the selecting means is configured to:
determine whether a predetermined part of the base stations in the active set belongs to the same branch;
select, if the predetermined part of the base stations in the active set belongs to the same branch, the star base station of the current serving base station as a new serving base station.

22. The radio network of claim 21, **characterized in that** the predetermined part is required to be such that more half of the base stations in the active set belong to the same branch.

23. The radio network of claim 16, **characterized** that the network comprises:
means for monitoring the continuously load level of a base station;
means for relocating at least one connection for which the base station acts as a serving base station, if a predetermined load condition is fulfilled;
means for dropping otherwise at least one connection served by the base station.
